# EUROPÄISCHE PATENTANMELDUNG

(11) **EP 1 772 760 A1**
(43) Veröffentlichungstag der Anmeldung: **11.04.2007**
(21) Anmeldenummer: 06017504.9
(22) Anmeldetag: 23.08.2006
(51) Int. Cl.: G02B 13/16, G02B 23/12

(54) **Im Infraroten arbeitendes Objektiv**

(30) Priorität: 04.10.2005 DE 102005047488
(71) Anmelder: Noctron Holding S.A., 8140 Bridel (LU)
(72) Erfinder: Diamantidis, Georg, 56307 Dernbach (DE); Guozhong, Zhao, Shanghai (CN)
(74) Vertreter: Ostertag, Reinhard

(57) **Zusammenfassung**

Ein Objektiv (10) zur Verwendung in einem Nachtsichtgerät hat eine vordere Linsengruppe (G1) und eine hintere Linsengruppe (G2). Die Linsen der vorderen Linsengruppe (G1) haben im wesentlichen gleichen Durchmesser, während die Linsen (L3 bis L6) der hinteren Linsengruppe (G2) ausgehend vom vorderen Ende der Linsengruppe zunehmend größeren Durchmesser haben.

## Beschreibung

Die Erfindung betrifft ein im Infraroten arbeitendes Objektiv, insbesondere zur Verwendung in einem Nachtsichtgerät.

Nachtsichtgeräte haben üblicherweise einen im Infrarot arbeitenden Bildwandler, auf den mit einem Objektiv ein zu beobachtendes Objekt abgebildet wird. Das Objektiv hat im Infraroten durchlässige Linsen.

Nachtsichtgeräte haben oft ein hohes Gewicht und sind daher oft in der Handhabung unhandlich und beschwerlich.

Durch die vorliegende Erfindung soll ein Objektiv für ein Nachtsichtgerät angegeben werden, welches sich durch besonders geringes Gewicht und gute Verzeichnungsfreiheit auszeichnet, trotzdem aber im Stande ist, einen IR-Bildwandler voll auszuleuchten.

Diese Aufgabe ist erfindungsgemäß gelöst durch ein Objektiv mit den im Anspruch 1 angegebenen Merkmalen.

Bei dem erfindungsgemäßen Objektiv hat eine objektseitige oder vordere Linsengruppe kleineren Durchmesser als eine hintere oder wandlerseitige Linsengruppe. Die vordere Linsengruppe hat somit überwiegend achsnahe Linsenbereiche, in denen die Verzerrungen klein sind. Nur in der hinteren Linsengruppe werden auch größeren Abstand von der Objektivachse aufweisende Linsenbereiche mitverwendet, um den Infrarot-Bildwandler voll auszuleuchten.

Vorteilhafte Weiterbildungen der Erfindung sind Gegenstand von Unteransprüchen.

Nachstehend wird die Erfindung anhand von zwei Ausführungsbeispielen unter Bezugnahme auf die Zeichnung näher erläutert. In dieser zeigen:
- Figur 1: einen axialen Schnitt durch ein erstes Infrarot-Nachtsichtgerät mit einem sechslinsigen Objektiv; und
- Figur 2: ein ähnliches Objektiv wie Figur 1, bei welchem jedoch eine hintere Linse der objektseitigen Linsengruppe des Objektives durch zwei Einzellinsen gebildet ist, die über komplementäre Begrenzungsflächen aneinander anliegen.

In der vorliegenden Beschreibung und den Ansprüchen werden Lageangaben "vorne" und "hinten" verwendet. Diese Lageangaben sind auf einen Betrachter des Nachtsichtgerätes bezogen, der von der Objektseite her auf das Objektiv und zum hinter dem Objektiv liegenden Wandler blickt. Teilweise wird für "vorn" auch das Adjektiv "objektseitig" und für "hinten" das Adjektiv "wandlerseitig" verwendet.

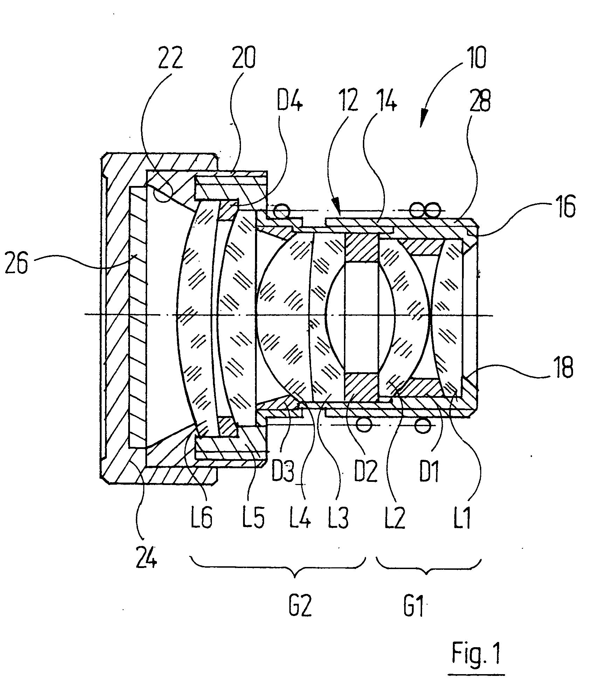

In der Figur 1 ist mit 10 insgesamt ein Objektiv bezeichnet, welches ein mehrfach radial abgestuftes Gehäuse 12 umfasst. Das Gehäuse 12 hat ein mehrfach abgestuftes Hülsenteil 14, welches am objektseitigen (in Figur 1 rechts gelegenen) oder vorderen Ende einen radial nach innen kragenden Stützflansch 16 aufweist, der ein Eintrittsfenster 18 mit kegelförmiger Begrenzungsfläche aufweist.

Das in der Zeichnung links gelegene Ende des Hülsenteiles 14 ist mit Gewinde versehen. Auf diesem Gewinde läuft ein Endring 20, der ein ebenfalls kegelförmiges Austrittsfenster 22 vorgibt.

Die nach hinten weisende Stirnfläche des Stützflansches 16 und die nach vorne weisende Stirnfläche des Endringes 20 bilden Positionierschultern, zwischen denen zwei Linsengruppen G1 und G2 axial hintereinanderliegend spielfrei gehalten sind.

Die Linsengruppe G1 umfasst eine vordere Linse L1, die bikonvex ist und aus ZnBaF6 gefertigt ist.

Hinter der Linse L1 ist durch einen Distanzring D1 beabstandet eine zweite oder hintere Linse L2 der vorderen Linsengruppe G1 vorgesehen. Es handelt sich hierbei um eine konvex/konkave Linse, die aus ZnF7 hergestellt ist.

Zwischen der vorderen Linsengruppe G1 und der hinteren Linsengruppe G2 befindest sich ein Distanzring D2, der beide Linsengruppen deutlich beabstandet. Seine axiale Abmessung beträgt etwa ein Drittel seines Außenradius.

Die zweite Linsengruppe G2 umfasst eine vordere Linse L3, die als konkav/konvexe Linse ausgebildet ist. Diese Linse ist aus ZnF7 hergestellt, und der Radius ihrer vorderen Begrenzungsfläche ist deutlich größer als der ihrer nur schwach gekrümmten hinteren Begrenzungsfläche.

Die hintere Begrenzungsfläche der Linse L3 ist komplementär zur vorderen Begrenzungsfläche einer weiteren Linse L4, die abstandsfrei auf der Rückseite der Linse L3 liegt. Die Linse L4 ist aus ZnBaF6 hergestellt. Ihre rückwärtige Krümmung ist deutlich größer als ihre vordere Krümmung.

Von der Linse L4 ist durch einen weiteren Distanzring D3 eine fünfte Linse L5 des Objektives geringfügig beabstandet, welche eine schwach konkave vordere Begrenzungsfläche und eine dem gegenüber stärker gekrümmte hintere Begrenzungsfläche aufweist. Diese Linse ist ebenfalls aus ZnBaF6 hergestellt.

Durch einen weiteren Distanzring D4 ist von der Linse L5 eine weitere Linse L6 geringfügig beabstandet, deren vordere Begrenzungsfläche schwach konkav ist, während ihre hintere Begrenzungsfläche dem gegenüber stärker gekrümmt ist. Die 6. Linse ist der 5. Linse ähnlich oder gleich. Die Krümmungsradien der rechts gelegenen konkaven Begrenzungsflächen sind untereinander gleich, ebenfalls sind die in der Zeichnung links gelegenen hinteren Begrenzungsflächen gleich gekrümmt.

Einzelheiten der Krümmungsradien der verschiedenen Linsenflächen sowie die Dicke der verschiedenen Linsen und das Material, aus welchem sie gefertigt sind, sind in der in der Anlage gegebenen Tabelle 1 zusammengefasst.

Der Endring 20 des Gehäuses 12 ist auf seiner Außenseite mit einem Gewinde versehen, das in einem Innengewinde eines Wandlergehäuses 24 läuft. Das Wandlergehäuse 14 nimmt einen IR-Bildwandler 26 auf, der über nicht gezeigte Leiter mit einer Betriebsschaltung verbunden ist, über welche er die notwendigen Betriebsspannungen erhält und über welche er laufend ausgelesen wird, um auf einem in der Zeichnung nicht wiedergegebenen Monitor ein sichtbares Bild des empfangenen Infrarot-Bildes zu erzeugen.

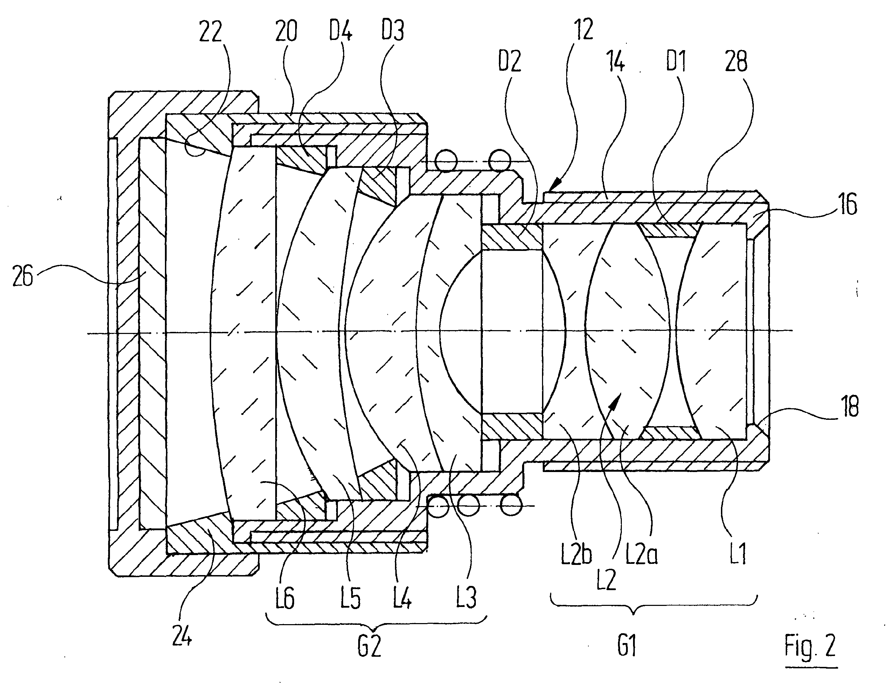

Das Ausführungsbeispiel nach Figur 2 ist in anderem Maßstab gezeigt als dasjenige nach Figur 1. Die Größenverhältnisse sind in Wirklichkeit im wesentlichen ähnlich, wie sich aus dem in Tabelle 2 des Anhanges angegebenen Maßen im einzelnen ergibt.

Der Hauptunterschied des Objektives nach Figur 2 zu dem nach Figur 1 liegt im folgenden:

Die hintere Linse L2 der objektseitigen Linsengruppe G1 ist durch zwei Linsen L2a und L2b gebildet, die über komplementäre Begrenzungsflächen aneinander anliegen. Die Linse L2a ist eine bikonvexe Linse, während die Linse L2b eine bikonkave Linse ist.

Die äußeren Begrenzungsflächen der Linse L2 sind aber wieder grob konzentrisch, wie auch beim Ausführungsbeispiel nach Figur 1.

Das Hülsenteil 14, der Endring 20 und das Wandlergehäuse 24 sind bei beiden Ausführungsbeispielen Kunststoff-Spritzteile oder Metallteile. Gleiches gilt für die Distanzringe D. Die Materialien, aus welchen die einzelnen Linsen gefertigt sind, sind in den Tabellen 1 und 2 des Anhanges wiedergegeben.

Die Außenseite des Hülsenteiles 14 kann ein Außengewinde 28 tragen, wie schematisch in den Figuren angedeutet, um die gesamte Einheit aus Objektiv und Bildwandler an einer tragbaren Halteeinrichtung zu befestigen.

**Tabelle 1**

| Technische Daten des Objektives nach Ausführungsbeispiel 1 | | | | | | |
|---|---|---|---|---|---|---|
| (R1 = Radius der vorderen Linsenfläche, | | | | | | |
| R2 = Radius der hinteren Linsenfläche) | | | | | | |
| Linse | R1 (mm) | R2 (mm) | Dicke (mm) | Glastyp | Durchmesser (mm) | Bemerkung |
| L1 | 29,627 | 15,254 | 2,00 | ZnBaF6 | 9.6 | konvex |
| L2 | 7,55 | 6,486 | 2,789 | ZnF7 | 9,6 | konkav |
| L3 | 40,893 | 4,46 | 2,246 | ZnF7 | 10.3 | konkav |
| L4 | 40,27 | 6,607 | 3,00 | ZnBaF6 | 10,3 | konkav |
| L5 | 67,311 | 21,58 | 2,00 | ZnBaF6 | 13,0 | konkav |
| L6 | 67,311 | 21,58 | 2,00 | ZnBaF6 | 14,5 | konkav |

**Tabelle 2**

| Technische Daten des Objektives nach Ausführungsbeispiel 2 | | | | | | |
|---|---|---|---|---|---|---|
| (R1 = Radius der vorderen Linsenfläche, | | | | | | |
| R2 = Radius der hinteren Linsenfläche) | | | | | | |
| Linse | R1 (mm) | R2 (mm) | Dicke (mm) | Glastyp | Durchmesser (mm) | Bemerkung |
| L1 | 115,5 | 9,954 | 3,18 | LaF1 | 9,5 | konvex |
| L2a | 8,465 | 8,465 | 3,82 | LaF1 | 9,4 | konvex |
| L2b | 8,465 | 7,383 | 3,22 | ZnF2 | 9,4 | konkav |
| L3 | 15,58 | 4,504 | 2,88 | ZnF21 | 12,0 | konkav |
| L4 | 15,58 | 7,77 | 3,18 | ZK11 | 12,0 | konkav |
| L5 | 12,742 | 25,30 | 2,73 | LaF1 | 14,4 | konkav |
| L6 | 223,4 | 33,725 | 2,73 | BaF2 | 16,2 | konvex |

## Patentansprüche

1. Im Infraroten arbeitendes Objektiv, insbesondere für ein Nachtsichtgerät, mit einer vorderen Linsengruppe (G1) und einer hinteren Linsengruppe (G2), **dadurch gekennzeichnet, daß** die Durchmesser der Linsen (L3 bis L6) der hinteren Linsengruppe (G2) in Richtung nach hinten stetig zunimmt.

2. Objektiv nach Anspruch 1, **dadurch gekennzeichnet, daß** beide Linsengruppen (G1, G2) von einander um eine vorgegebene Strecke beabstandet sind, während die innerhalb der Linsengruppen (G1, G2) liegenden Linsen (L1 bis L2 bzw. L3 bis L6) im wesentlichen abstandsfrei aufeinander folgen.

3. Objektiv nach Anspruch 1 oder 2, **dadurch gekennzeichnet, daß** die hintere Begrenzungsfläche einer hintersten Linse (L2) der vorderen Linsengruppe (G1) und die vordere Begrenzungsfläche einer vordersten Linse (L3) der hinteren Linsengruppe (G2) beide konkav sind.

4. Objektiv nach Anspruch 2, **dadurch gekennzeichnet, daß** der Radius der hinteren Begrenzungsfläche der hintersten Linse (L2) der vorderen Linsengruppe (G1) etwa 1,5 bis 3 mal so groß ist, vorzugsweise etwa 2 mal so groß ist wie der Radius der vorderen Begrenzungsfläche der vordersten Linse (L3) der hinteren Linsengruppe (G2).

5. Objektiv nach einem der Ansprüche 1 bis 4, **dadurch gekennzeichnet, daß** die erste Linse (L3) und die zweite Linse (L4) der hinteren Linsengruppe (G2) komplementär gleichen Radius haben und aneinander anliegen.

6. Objektiv nach einem der Ansprüche 1 bis 5, **dadurch gekennzeichnet, daß** die erste Linse (L3) und die zweite Linse (L4) der zweiten Linsengruppe (G2) zusammen eine Streulinse bilden.

7. Objektiv nach einem der Ansprüche 1 bis 6, **dadurch gekennzeichnet, daß** eine dritte Linse (L5) der hinteren Linsengruppe (G2) eine konkave vordere Begrenzungsfläche und eine demgegenüber stärker gekrümmte konvexe hintere Begrenzungsfläche aufweist.

8. Objektiv nach einem der Ansprüche 1 bis 7, **dadurch gekennzeichnet, daß** eine vierte Linse (L6) der hinteren Linsengruppe (G2) eine konkave vordere Begrenzungsfläche und eine gegenüber der letzteren stärker gekrümmte konvexe hintere Begrenzungsfläche aufweist.

9. Objektiv nach einem der Ansprüche 1 bis 8, **dadurch gekennzeichnet, daß** eine erste Linse (L1) der vorderen Linsengruppe eine konvexe vordere Begrenzungsfläche und eine konvexe hintere Begrenzungsfläche aufweist, wobei der Radius der vorderen Begrenzungsfläche deutlich größer ist als derjenige der hinteren Begrenzungsfläche, vorzugsweise das 1,5 bis 3fache, nochmals bevorzugt das 2fache des Radius der hinteren Begrenzungsfläche beträgt.

10. Objektiv nach einem der Ansprüche 1 bis 9, **dadurch gekennzeichnet, daß** eine zweite Linse (L2) der vorderen Linsengruppe (G1) durch zwei Linsen (L2a, L2b) gebildet ist, welche über komplementäre Begrenzungsflächen aneinander anliegen.

11. Objektiv nach einem der Ansprüche 1 bis 10, **dadurch gekennzeichnet, daß** die Linsen aus ZnBaF6 oder ZnF7 bestehen.

12. Objektiv nach Anspruch 11, **dadurch gekennzeichnet, daß** die Linsengruppen (G1, G2) Linsen (L1 bis L6) umfassen, deren Geometrie und Materialien gemäß der beigefügten Tabelle 1 gewählt sind:

13. Objektiv nach einem der Ansprüche 1 bis 10, **dadurch gekennzeichnet, daß** die Linsen (L1 bis L7) aus LaF1, ZnF2, ZFK11 oder BaF2 bestehen.

14. Objektiv nach Anspruch 13, **dadurch gekennzeichnet, daß** die beiden Linsengruppen (G1 und G2) Linsen (L1 bis L7) umfassen, deren Geometrien und Materialien gemäß der beigefügten Tabelle 2 gewählt sind.

15. Objektiv nach einem der Ansprüche 1 bis 14, **dadurch gekennzeichnet, daß** Distanzringe (D1 bis D4), durch welche die Linsen (L3 bis L6) der hinteren Linsengruppe (G2) axial positioniert sind, kegelstumpfförmige Innenflächen aufweisen.

16. Objektiv nach Anspruch 15, **dadurch gekennzeichnet, daß** die kegelstumpfförmigen Innenflächen der Distanzringe (D1 bis D4) im wesentlichen eine gemeinsame Kegelfläche vorgeben.

17. Objektiv nach einem der Ansprüche 1 bis 16, **dadurch gekennzeichnet, daß** die Linsen (L1 bis L7) der beiden Linsengruppen (G1, G2) in ein hülsenförmiges Gehäuseteil (14) von hinten her eingesetzt sind, welches am hinteren Ende durch einen Endring (20) verschlossen ist.

18. Objektiv nach einem der Ansprüche 1 bis 17, **dadurch gekennzeichnet, daß** das Gehäuse am hinteren Ende mit einem Wandlergehäuse (24) verbunden ist, vorzugsweise in lösbarer Weise, bevorzugt durch eine Schraubverbindung.
**Tabelle 1**
| Technische Daten des Objektives nach Anspruch 12 | | | | | | |
|---|---|---|---|---|---|---|
| (R1 = Radius der vorderen Linsenfläche, | | | | | | |
| R2 = Radius der hinteren Linsenfläche) | | | | | | |
| Linse | R1 (mm) | R2 (mm) | Dicke (mm) | Glastyp | Durchmesser (mm) | Bemerkung |
| L1 | 29,627 | 15,254 | 2,00 | ZnBaF6 | 9,6 | konvex |
| L2 | 7,55 | 6.486 | 2,789 | ZnF7 | 9,6 | konkav |
| L3 | 40,893 | 4,46 | 2,246 | ZnF7 | 10.3 | konkav |
| L4 | 40,27 | 6,607 | 3,00 | ZnBaF6 | 10,3 | konkav |
| L5 | 67,311 | 21,58 | 2,00 | ZnBaF6 | 13,0 | konkav |
| L6 | 67,311 | 21,58 | 2,00 | ZnBaF6 | 14,5 | konkav |
**Tabelle 2**
| Technische Daten des Objektives nach Anspruch 14 | | | | | | |
|---|---|---|---|---|---|---|
| (R1 = Radius der vorderen Linsenfläche, | | | | | | |
| R2 = Radius der hinteren Linsenfläche) | | | | | | |
| Linse | R1 (mm) | R2 (mm) | Dicke (mm) | Glastyp | Durchmesser (mm) | Bemerkung |
| L1 | 115,5 | 9,954 | 3,18 | LaF1 | 9,5 | konvex |
| L2a | 8,465 | 8,465 | 3,82 | LaF1 | 9,4 | konvex |
| L2b | 8,465 | 7,383 | 3,22 | ZnF2 | 9,4 | konkav |
| L3 | 15,58 | 4,504 | 2,88 | ZnF21 | 12,0 | konkav |
| L4 | 15,58 | 7,77 | 3,18 | ZK11 | 12,0 | konkav |
| L5 | 12,742 | 25,30 | 2,73 | LaF1 | 14,4 | konkav |
| L6 | 223,4 | 33,725 | 2,73 | BaF2 | 16,2 | konvex |
